Europäisches Patentamt

European Patent Office

Office européen des brevets

(19)

(11)  **EP 1 232 407 B1**

(12)  **FASCICULE DE BREVET EUROPEEN**

(45) Date de publication et mention
de la délivrance du brevet:
**17.09.2003   Bulletin 2003/38**

(21) Numéro de dépôt: **00988872.8**

(22) Date de dépôt: **24.11.2000**

(51) Int Cl.⁷: **G02B 5/28**, G02B 5/20,
F21V 9/04, C03C 17/34

(86) Numéro de dépôt international:
**PCT/FR00/03280**

(87) Numéro de publication internationale:
**WO 01/038246 (31.05.2001 Gazette 2001/22)**

(54) **FILTRE ANTICALORIQUE ET PROCEDE DE FABRICATION DE CE FILTRE**

WÄRMEABSORBIERENDER FILTER UND VERFAHREN ZU DESSEN HERSTELLUNG

HEAT-ABSORBING FILTER AND METHOD FOR MAKING SAME

(84) Etats contractants désignés:
**AT BE CH CY DE DK ES FI FR GB GR IE IT LI LU
MC NL PT SE TR**

(30) Priorité:  **26.11.1999  FR 9914896**

(43) Date de publication de la demande:
**21.08.2002   Bulletin 2002/34**

(73) Titulaires:
• **COMMISSARIAT A L'ENERGIE ATOMIQUE**
**75752 Paris Cédex 15 (FR)**
• **ALM**
**45160 Ardon (FR)**

(72) Inventeurs:
• **FIRON, Muriel**
**F-91530 Saint Cheron (FR)**

• **MONTERRAT, Eric**
**F-37230 Fondettes (FR)**
• **MONNOT, Jérôme**
**F-45240 Menestreau en Villette (FR)**

(74) Mandataire: **Audier, Philippe André**
**Brevatome,**
**3, rue du Docteur Lancereaux**
**75008 Paris (FR)**

(56) Documents cités:
GB-A- 2 116 590        GB-A- 2 324 098
US-A- 4 581 280        US-A- 5 341 238
US-A- 5 667 880        US-A- 5 897 957

EP 1 232 407 B1

## Description

### Domaine technique

La présente invention se rapporte à un filtre anticalorique et à un procédé de fabrication de ce filtre.

Un filtre anticalorique peut par exemple être utilisé pour filtrer un éclairage opératoire composé d'une source lumineuse qui émet de l'énergie, ou rayonnement, dans les domaines visible et infrarouge. Il doit permettre de filtrer la lumière émise par cette source afin d'éviter que le rayonnement infrarouge ne gêne l'équipe chirurgicale ou le patient.

Ce filtre doit bloquer les plus grandes longueurs d'ondes, tout en restant neutre au sens de la perception des couleurs par l'oeil humain dans le domaine visible. Les plus faibles longueurs d'onde peuvent également être absorbées ou réfléchies par le filtre.

Outre l'éclairage médical, un tel filtre peut également être utilisé pour une lampe de soins, une lampe de bureau, un système d'éclairage par fibres optiques, un vitrage, un système de projection optique, une ampoule, etc...

### Art antérieur

Dans le cadre de l'application éclairage opératoire ou "éclairage chirurgical", ce type de filtre est fabriqué à partir d'un verre dopé opaque au rayonnement infrarouge.

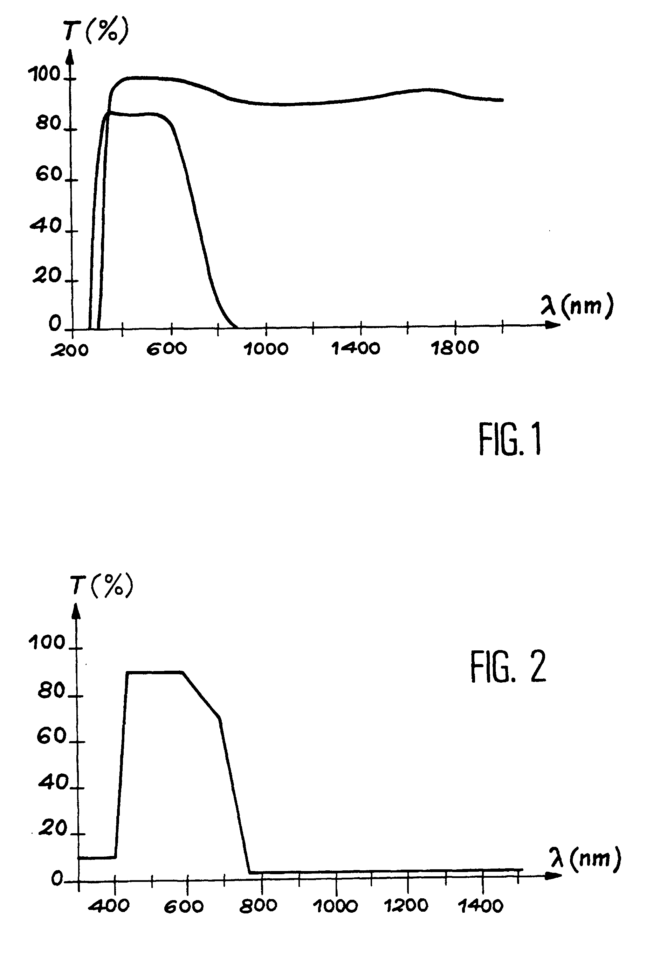

Le spectre de transmission de ce verre dopé pour une épaisseur de 3 mm est proposé sur la figure 1 en annexe, référencé 1, et comparé avec le spectre de transmission d'un verre ordinaire de 3 mm d'épaisseur, référencé 3. Sur cette figure, l'axe des ordonnées représente la transmission interne T et l'axe des abscisses, la longueur d'onde $\lambda$ en nm.

Un traitement multicouche de ce verre dopé destiné à déposer des couches de $SiO_2$ et de $Nb_2O_5$ permet d'améliorer sa transmission dans le domaine visible pour en faire un filtre anticalorique appelé ci-après filtre verre dopé. Les performances optiques de ce filtre sont données dans le tableau 1 suivant :

Tableau 1

| Définition | Filtre verre dopé |
|---|---|
| Radian énergétique RE (mW/m$^2$/Lux) | 4,25 |
| Transmission moyenne visible $T_{vis}$(%) | 80,4 |
| Température de couleur $T_{coul}$ (K) | 3585 |
| Indice de rendu de couleur IRC ou $R_A$ (normes CIE*) | 97,3 |
| $R_9$ (normes CIE*) | 84,4 |

* Compagnie Internationale d'Eclairage

Malgré ces bonnes performances, le filtre verre dopé est un matériau cher et qui ne fonctionne pas bien en milieu humide et chaud. Par exemple dans les pays à climat tropical, il est nécessaire de protéger ce filtre de l'humidité et des UV par une couche supplémentaire de $SiO_2$, ce qui accroît son coût de fabrication.

Le document GB-A-2324098 décrit un filtre anticalorique comprenant un substrat en verre, une couche d'un matériau réflecteur infrarouge, un revêtement forment un filtre interférentiel qui comprend un groupe d'empilement d'un premier et d'un deuxième films d'indice de réfraction $n_1$ et $n_2$ répété N fois.

Le document US-A-5341238 décrit un filtre anticalorique qui comprend, un substrat, une couche d'ITO un filtre interférentiel multicouche et un deuxième filtre interférentiel. Le deuxième filtre est conçu pour réfléchir le rayonnement dans une bande visible étroite, par exemple le rayonnement d'un laser HeNe.

### Exposé de l'invention

La présente invention a précisément pour but de pallier les inconvénients précités, en fournissant un filtre anticalorique à faible coût de fabrication ayant les propriétés requises dans le domaine visible ou domaine du spectre visible et dans le domaine infrarouge.

Ce filtre anticalorique comprend un substrat, au moins une couche d'un matériau réflecteur infrarouge, et un revêtement formant un filtre interférentiel dans le domaine visible.

En particulier, la présente invention fournit un filtre anticalorique comprenant un substrat, une couche d'un matériau réflecteur infrarouge recouvrant au moins une surface du substrat, et un revêtement formant un filtre interférentiel dans le domaine visible recouvrant ladite couche du matériau réflecteur infrarouge.

Le substrat peut être un substrat de verre, tel que du verre ordinaire transparent, ou de plastique. Le substrat de verre a, par exemple, pour une épaisseur de 2 mm, une transparence de 30% à 3 µm environ.

Lorsque le substrat est en plastique, il peut être nécessaire, dans certains cas, qu'il soit résistant à des températures de 200 à 300°C, notamment lorsque la technique de fabrication du filtre comprend des traitements à ces températures.

Le matériau réflecteur infrarouge peut être un oxyde conducteur transparent, par exemple de l'oxyde d'indium dopé à l'étain (ITO). Ces oxydes métalliques sont bien connus dans l'industrie du bâtiment, par exemple du vitrage, puisqu'ils sont transparents dans le visible et réflecteurs dans l'infrarouge.

En faisant varier la composition chimique de l'oxyde conducteur transparent, il est possible de modifier le niveau de réflexion infrarouge et la longueur d'onde de transition entre un comportement diélectrique, c'est-à-dire transparent et métallique, c'est-à-dire réflecteur. C'est le cas par exemple pour l'ITO.

Selon l'invention, l'oxyde d'indium dopé à l'étain peut présenter un rapport Sn/In allant d'environ 9 à environ 11% en masse, par exemple d'environ 10% en masse. Un rapport d'environ 10% en masse permet d'obtenir un niveau de réflexion maximal.

D'autres matériaux réflecteurs peuvent être utilisés, par exemple des métaux tels que de l'or, de l'argent ou de l'aluminium. Mais ils sont également réflecteurs dans le visible, il est donc nécessaire de les déposer en couches très minces, par exemple de 10 nm environ, pour conserver une transmission suffisante.

Selon l'invention, le revêtement formant un filtre interférentiel dans le domaine visible peut comprendre au moins un groupe d'empilement répété N fois d'au moins un premier film et d'au moins un deuxième film, dans lequel ledit groupe d'empilement présente une alternance du premier film et du deuxième film, le premier film ayant une épaisseur L ou multiple de L et étant constitué d'un premier matériau ayant un indice de réfraction $n_1$, et le deuxième film ayant une épaisseur H ou multiple de H et étant constitué d'un deuxième matériau ayant un indice de réfraction $n_2$, dans lequel N est un nombre entier et H et L sont des épaisseurs géométriques, et dans lequel N, H, L, $n_1$ et $n_2$ sont tels que le revêtement formant un filtre interférentiel présente une fenêtre de transmission située entre 400 et 800 nm.

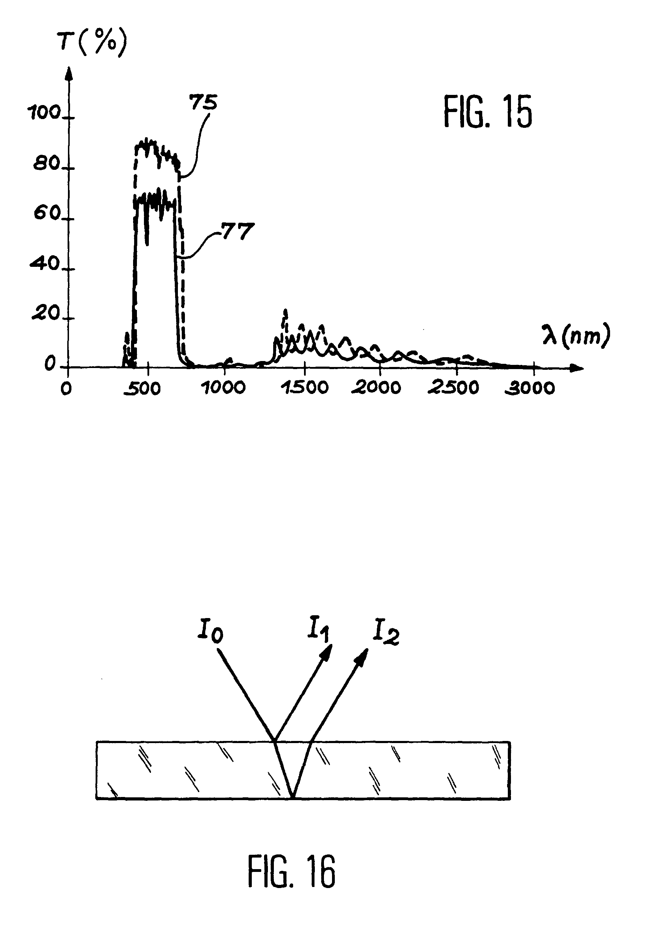

La définition de l'épaisseur géométrique est donnée en considérant un film ou une couche mince déposé(e) sur un substrat quelconque et une longueur d'onde de référence $\lambda_0$. Cette couche d'épaisseur e a un indice de valeur n pour cette longueur d'onde de référence. Si on éclaire la couche avec une source $I_0$ de longueur d'onde $\lambda_0$, la partie du rayonnement lumineux $I_1$ réfléchie à la première interface, c'est-à-dire l'interface air-couche, va interférer avec celle $I_2$ réfléchie à la seconde interface, c'est-à-dire à l'interface couche-substrat comme le montre la figure 16 en annexe.

Le déphasage de l'onde $I_2$ par rapport à l'onde $I_1$ provient du passage au travers de la couche et vaut $\frac{4\pi ne}{\lambda_0}\cos\theta$. S'il est égal à $(2p+1)\pi$, avec p entier, et dans la mesure où la valeur de l'indice du substrat est plus faible que celle de l'indice de la couche déposée, les interférences sont destructives et la réflexion est minimale à $\lambda_0$. Pour cette longueur d'onde, la couche est appelée couche quart-d'onde et est notée H si l'indice est fort, L si l'indice est faible. $\theta$ est l'angle que fait le rayon réfracté dans le milieu d'indice n. En général, on travaille à incidence normale, $\cos\theta$ vaut 1.

Si l'on pose p=0, on a ainsi $\frac{4\pi ne}{\lambda_0}\pi$, l'épaisseur d'une lame quart d'onde sera donc :

$$e=\lambda_0/4n$$

Cette épaisseur est notée H si n est un indice fort et L si n est un indice faible.

L'architecture d'un empilement est, en général, donnée en multiples de films ou couches quart d'onde, c'est ce qu'on appelle l'épaisseur géométrique. L'intérêt d'une telle notation est de pouvoir décaler spectralement les propriétés de l'empilement en ne changeant que la valeur de la longueur d'onde de référence, dans la mesure où l'indice n est constant entre les deux longueurs d'onde.

Par exemple, dans le revêtement interférentiel, le premier matériau peut être du $SiO_2$ et le deuxième matériau peut être du $TiO_2$. Par exemple, aussi, le premier matériau peut être $SiO_2$ et le deuxième matériau $Si_3N_4$. Tout autre couple de matériaux ayant un comportement diélectrique et des valeurs d'indice différentes est acceptable.

Lorsqu'il s'agit de $SiO_2$ et de $TiO_2$, le revêtement formant un filtre interférentiel dans le domaine visible peut comprendre un premier groupe d'empilement présentant une alternance de type 0,5L/H/0,5L répétée 8 fois. En outre, il peut comprendre un deuxième groupe d'empilement présentant une alternance de type 0,65L/1,3H/0,65L répétée 8 fois.

Par exemple, dans le filtre anticalorique, le substrat peut être un substrat de verre, la couche d'oxyde conducteur transparent peut être une couche d'oxyde d'indium dopée à l'étain, et le revêtement formant un filtre interférentiel dans le domaine visible peut être un empilement dans lequel alternent des films de $SiO_2$ et des films de $TiO_2$, l'empilement commençant par un film de $SiO_2$ déposé sur la couche d'ITO et se terminant par un film de $TiO_2$ en contact avec l'atmosphère, ledit empilement comprenant 17 films de $SiO_2$ et 16 films de $TiO_2$.

Lorsqu'il s'agit de $SiO_2$ et de $Si_3N_4$, le revêtement formant un filtre interférentiel dans le domaine visible comprend un premier groupe d'empilement présentant une alternance de type 0,5L/H/0,5L répétée 6 fois. Il peut comprendre en outre un deuxième groupe d'empilement présentant une alternance de type 0,65L/1,3H/0,65L répétée 6 fois.

Le filtre anticalorique peut comprendre en outre une couche antireflet et/ou une couche anti-rayure.

Le filtre de la présente invention peut être utilisé par exemple dans un système optique tel qu'un éclairage opératoire, une lampe de soins, une lampe, une lampe de bureau, un système d'éclairage par fibres optiques, un vitrage, un système de projection optique, une ampoule, etc... La présente invention se rapporte donc aussi à un tel système comprenant un filtre conforme à celui de la présente invention, par exemple à un éclairage opératoire ou à une lampe de soins, par exemple de soins médicaux, esthétiques, etc...

La source lumineuse peut être par exemple une ampoule à filament, une lampe halogène, une lampe à incandescence, etc...

La présente invention se rapporte également à un procédé de fabrication d'un filtre anticalorique comprenant un substrat, au moins une couche d'un matériau réflecteur infrarouge et un revêtement formant un filtre interférentiel dans le domaine visible.

Ce procédé comprend les étapes consistant à :

    a) fournir un substrat,
    b) déposer sur au moins une surface dudit substrat une couche d'un matériau réflecteur infrarouge,
    c) déposer sur ladite couche du matériau infrarouge un revêtement formant un filtre interférentiel dans le domaine visible.

Selon l'invention, dans l'exemple selon lequel le matériau réflecteur infrarouge est de l'oxyde d'indium dopé à l'étain (ITO), ce matériau peut être déposé par pulvérisation cathodique magnétron sur le substrat, par exemple à partir d'une cible frittée dont la composition est d'environ 9 à environ 11% en masse, par exemple d'environ 10% en masse d'oxyde d'étain dans $In_2O_3$. Dans le cas de l'ITO, le procédé de l'invention peut comprendre en outre une étape $a_1$) de recuit du matériau réflecteur infrarouge déposé sur le substrat.

Lorsque le filtre interférentiel comprend au moins un groupe d'empilement répété N fois tel que défini précédemment, dans lequel le premier matériau est $SiO_2$ et dans lequel le deuxième matériau est $TiO_2$, l'étape c) de dépôt du filtre interférentiel peut être une étape de dépôt des films réalisée par une technique d'évaporation sous vide ou de pulvérisation cathodique.

Le dépôt de films minces par évaporation sous vide est très employé pour l'élaboration de fonctions optiques complexes. Certains appareils automatisés peuvent être très utiles pour la présente invention car ils permettent de déposer des multicouches de quatre matériaux différents.

L'évaporation sous vide peut être réalisée par exemple au moyen d'un canon à électron. Cet appareil consiste à défléchir un faisceau d'électrons émis par un filament dans un creuset contenant le matériau à déposer. Le matériau cible s'évapore et se condense sur un substrat placé en regard du creuset. Cette méthode permet de déposer des matériaux de nature différente tels que des oxydes et des métaux.

Le canon à électron peut être par exemple le modèle EVA 1200 (marque de commerce) de la Société Alliance Concept, FRANCE.

Dans le cas des oxydes, il peut être nécessaire d'ajouter de l'oxygène dans l'enceinte afin d'améliorer la stoechiométrie des couches. La faible pression de travail de l'ordre de $10^{-2}$ à $10^{-3}$ Pa permet le dépôt de film mince d'une grande pureté. Cependant, l'énergie des espèces évaporées étant inférieure à 1 eV, c'est-à-dire relativement faible, les couches ont souvent une structure colonnaire et sont peu denses et peu adhérentes.

Pour améliorer cette structure et l'adhérence, on peut irradier par un faisceau d'ions la couche en cours de croissance. Il s'agit alors d'évaporation assistée. Cette assistance ionique peut être réactive par exemple lorsqu'on utilise des ions oxygène, ou non réactive par exemple lorsqu'on utilise des ions argon. Les différents paramètres de dépôt comme l'énergie, la température, les pressions partielles, le flux ou la nature des ions contribuent à optimiser les propriétés optiques des couches déposées.

La pulvérisation cathodique quant à elle consiste à faire une décharge électrique en milieu gazeux avec un gaz rare ou réactif, entre la cathode constituée du matériau à déposer et l'électrode à la masse la plus proche. Les ions du plasma généré bombardent la cible, et les espèces pulvérisées se condensent sur le substrat.

La pulvérisation cathodique magnétron est un procédé de dépôt à forte énergie pour les espèces pulvérisées (quelques eV). L'adhérence des couches déposées est souvent supérieure à celle observée dans le cas de l'évaporation. Cependant, la pression de travail dans l'enceinte est plus élevée, de l'ordre de 0,1 à 1 Pa, ce qui peut générer un certain taux de pollution dans les couches.

La structure des films dépend essentiellement de la pression et de la distance cible-substrat. Par ailleurs, le dépôt d'oxyde nécessite soit de travailler en radiofréquence, c'est-à-dire à environ 13,56 MHz, soit en courant continu DC sur une cible métallique en milieu réactif.

Dans le premier cas, la température de dépôt est plus élevée qu'en DC, de l'ordre de 80°C et la vitesse de dépôt est plus lente.

La pulvérisation cathodique ou pulvérisation cathodique magnétron peut être réalisée par exemple au moyen d'une machine de pulvérisation cathodique magnétron de type BAK 550 (marque de commerce) de la Société Balzers, LICHTENSTEIN.

Selon l'invention, lorsque le filtre interférentiel comprend au moins un groupe d'empilement répété N fois tel que défini précédemment, dans lequel le premier matériau est $SiO_2$ et dans lequel le deuxième matériau est $Si_3N_4$, l'étape de dépôt du filtre interférentiel peut être une étape de dépôt des films réalisée par une technique de dépôt plasma.

La présente invention réside notamment dans l'association d'un filtre infrarouge et d'un filtre UV-Visible, pouvant être déposés sur un substrat de verre ordinaire, ainsi que dans le niveau de performance d'éclairage de ce filtre.

Le filtre de la présente invention permet de filtrer le rayonnement infrarouge d'un éclairage tel qu'une lampe à incandescence sans perturber la vision des couleurs par l'oeil humain.

Le filtre offre également une transmission importante dans le domaine spectral visible. Il permet d'éviter l'échauffement de la zone d'observation et de garantir une bonne vision des couleurs et un bon rendement d'éclairage puissance lumineuse/puissance électrique.

En outre, son coût est bien inférieur aux filtres de l'art antérieur car il utilise un substrat qui peut être en verre ordinaire.

D'autres caractéristiques et avantages apparaîtront encore à la lecture de la description et des exemples qui suivent, donnés bien entendu à titre illustratif et non limitatif en référence aux figures en annexe.

**Brève description des figures**

- La figure 1 représente un spectre de transmission d'un verre de type verre dopé et un spectre de transmission d'un verre ordinaire.
- La figure 2 représente une fenêtre de transmission dans la gamme visible.
- La figure 3 représente les spectres de réflexion et de transmission expérimentales et modélisées d'un film d'ITO de 250 nm d'épaisseur déposé sur un substrat de verre.
- La figure 4 représente un spectre de transmission d'un substrat de verre nu de 2 mm d'épaisseur.
- Les figures 5 et 6 représentent la variation des indices de réfraction déterminée par ellipsométrie respectivement pour $SiO_2$ et $TiO_2$ pour différentes méthodes de dépôt.
- La figure 7 représente la variation du coefficient d'extinction k déterminé par ellipsométrie pour $TiO_2$ pour différentes méthodes de dépôt.
- La figure 8 représente la variation de l'indice de réfraction en fonction de la tension du canon à ion pour le dépôt de $TiO_2$.
- La figure 9 représente la transmission d'un empilement N x(0,5L/H/0,5L) pour différentes valeurs de N avec $\lambda_0$=880 nm.
- La figure 10 représente les spectres de transmission de l'empilement N x (0,5L/H/0,5L) + N x (0,5mL/mH/0,5mL) sur un substrat pour différentes valeurs de m.
- La figure 11 illustre l'effet du recuit d'une couche d'ITO sur les propriétés optiques de cette couche.
- La figure 12 illustre une étude paramétrique de différentes spécifications en fonction de l'épaisseur d'ITO avec deux groupes d'empilement répétés 5 fois suivant une architecture

5 x (0,65L/3H/0,65L) + 5 x (5H/L/5H)/ITO/Verre.

- La figure 13 est un graphique illustrant l'amélioration des performances de filtrage de l'architecture avec le nombre d'empilements des films de $SiO_2$ et de $TiO_2$.
- La figure 14 est une illustration d'une étude paramétrique de différentes spécifications en fonction de l'épaisseur d'ITO avec un revêtement formant un filtre interférentiel comprenant deux groupes d'empilement répétés 8 fois suivant une architecture 8 x (0,5L/H/0,5L) + 8 x (0,65L/1,3H/0,65L)/ITO/Verre.
- La figure 15 représente pour comparaison le spectre théorique de transmission du filtre de la présente invention, et le spectre obtenu expérimentalement, pour un revêtement formant un filtre interférentiel $SiO_2/TiO_2$.
- La figure 16 est un schéma illustrant des réflexions multiples de la lumière au travers d'une couche mince et transparente.
- La figure 17 représente pour comparaison le spectre thermique de transmission du filtre de la présente invention

et le spectre obtenu expérimentalement pour un revêtement formant un filtre interférentiel $SiO_2/Si_3N_4$.

- La figure 18 illustre une étude paramétrique des performances de transmission (%) et de température de couleur (K) en fonction de l'épaisseur d'une couche d'ITO sur verre avec un revêtement formant un filtre interférentiel $SiO_2/Si_3N_4$ comprenant deux groupes d'empilement répétés 8 fois suivant une architecture 8 x (0,65L/3H/0,65L) + 8 x (5H/L/5H)/ITO/Verre.

## Exemples

### A. Introduction

Les inventeurs ont dans un premier temps, séparé les deux domaines spectraux. Ils présentent ci-dessous, la démarche qui conduit à définir l'architecture d'un empilement purement diélectrique pour former le revêtement formant le filtre interférentiel dans le domaine visible.

Ce filtre anticalorique selon l'invention doit par exemple répondre aux spécifications suivantes dans le domaine visible :

- Radiant énergétique (partie infrarouge de l'intensité lumineuse totale transmise) inférieur à 4,5 mW/m$^2$.Lux,
- Transmission visible de la chaîne complète (intensité lumineuse transmise dans le domaine spectral visible) supérieure à 60%,
- Température de couleur de la chaîne optique : entre 3500 et 4000 K,
- Indice de Rendu de Couleur (IRC) : supérieur à 90,
- Rendu de couleur dans les rouges ($R_9$) : supérieur à 50.

Ensuite, la partie filtration infrarouge est traitée avec un matériau réflecteur dans ce domaine. Après avoir présenté les propriétés optiques de plusieurs d'entre eux, ils expliquent leur choix.

### B. Détermination des composants du filtre interférentiel dans le domaine visible : filtre diélectrique

Pour simplifier le procédé de fabrication, le choix est limité à deux matériaux diélectriques différents de type oxyde : $SiO_2$ et $TiO_2$. Ces deux matériaux ont un contraste d'indice fort, $\Delta n=1$ environ, et ne posent pas de problème particulier quant à leur approvisionnement. Ils sont d'ailleurs utilisés couramment dans l'industrie de l'optique et font l'objet d'une bibliographie importante.

Le choix des différents composants a été fait selon différents critères :

- fort contraste d'indice : les effets interférentiels sont marqués et les performances pourront être atteintes avec moins de films,
- facilité d'approvisionnement et coût : ces matériaux sont connus du milieu industriel et peu onéreux.

### C. Détermination des indices des matériaux

Indices de réfraction et choix de la méthode de dépôt

Le tableau 2 ci-dessous récapitule les différentes techniques de dépôt qui ont été testées pour chaque monocouche ($SiO_2$ et $TiO_2$).

Tableau 2

| Récapitulatif des différentes méthodes de dépôt étudiées | | | | |
|---|---|---|---|---|
| | Evaporation | Balayage gazeux | Assistance ionique | Nature de l'assistance |
| 1 | Simple | non | non | - |
| 2 | Réactive | oxygène | non | - |
| 3 | Assistée | non | oui | argon |
| 4 | Réactive assistée | oxygène | oui | argon |
| 5 | Assistée réactive | non | oui | oxygène |
| 6 | Réactive assistée réactive | oxygène | oui | oxygène |

Les propriétés optiques de chaque couche unitaire $SiO_2$ ou $TiO_2$ ont été déterminées par ellipsométrie spectroscopique UV-Visible-proche IR.

Pour faciliter cette opération, les couches mesurées ont été déposées sur silicium. Bien que le silicium ne soit pas optimal dans le domaine visible car il est difficile, aux courtes longueurs d'onde, de séparer l'absorption due à la couche de celle due au substrat, ses propriétés optiques sont bien connues, et son opacité dans le domaine visible permet de ne pas être gêné par les réflexions sur la face arrière du substrat.

Pour retrouver les caractéristiques des films, le modèle le plus couramment utilisé est le modèle de Cauchy dont l'expression de l'indice réel est la suivante :

$$n = A_n + B_n\lambda^{-2} + C_n\lambda^{-4}$$

Les propriétés d'un matériau diélectrique sont ainsi retrouvées : une valeur de n constante aux fortes longueurs d'onde et une augmentation sensible de cette valeur lorsque la longueur d'onde diminue, c'est-à-dire que les fréquences en augmentant se rapprochent de la valeur du "gap", correspondant à l'énergie de bande interdite. Pour des matériaux dont l'absorption est non négligeable et mesurable par ellipsométrie, c'est-à-dire pour des valeurs de k de l'ordre de $10^{-3}$ ou plus, le modèle de la queue d'Urbach pour k décroissant exponentiellement de l'UV vers les plus grandes longueurs d'onde peut être utilisé.

On pose alors :

$$k = A_k e^{1240 B_k \left(\frac{1}{\lambda} - \frac{1}{\lambda_0}\right)}$$

Le coefficient 1240 vient du fait que les inventeurs ont travaillé en nm alors que le phénomène est physiquement décrit en unité d'énergie (eV).

Ils ont cherché à superposer au mieux spectres expérimentaux et calculés en ajustant numériquement les 5 paramètres : $A_n$, $B_n$, $C_n$, $A_k$, $B_k$.

La technique de dépôt choisie est celle qui permet d'obtenir les caractéristiques optiques de chaque matériau se rapprochant de celles des matériaux massifs, avec le plus fort contraste d'indice observable entre les deux oxydes.

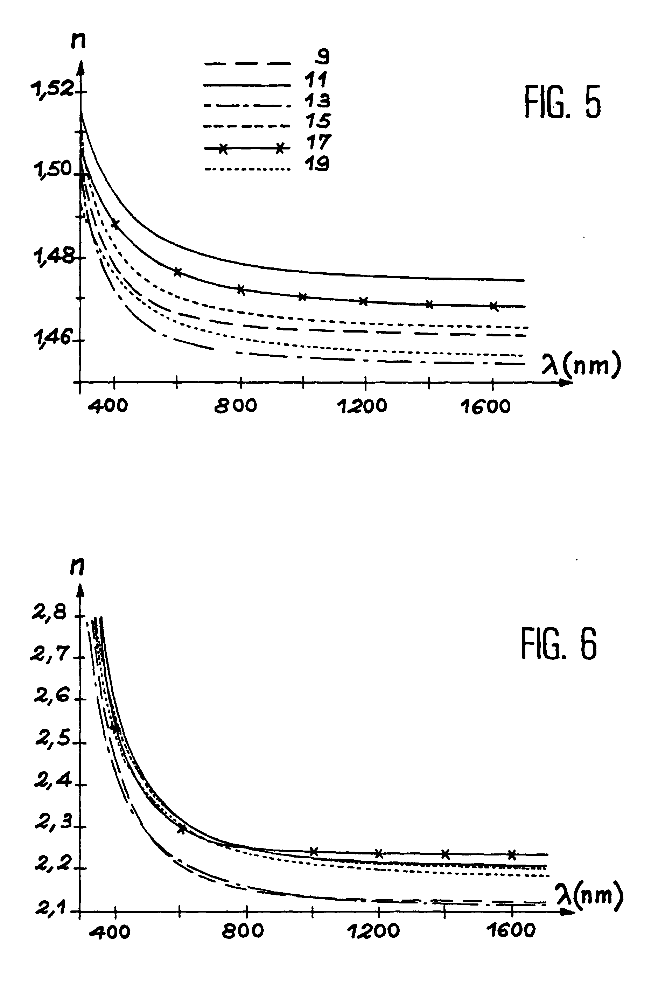

Les résultats obtenus sur les différentes couches déposées sont proposés sur les figures 5 et 6 pour n et 7 pour k.

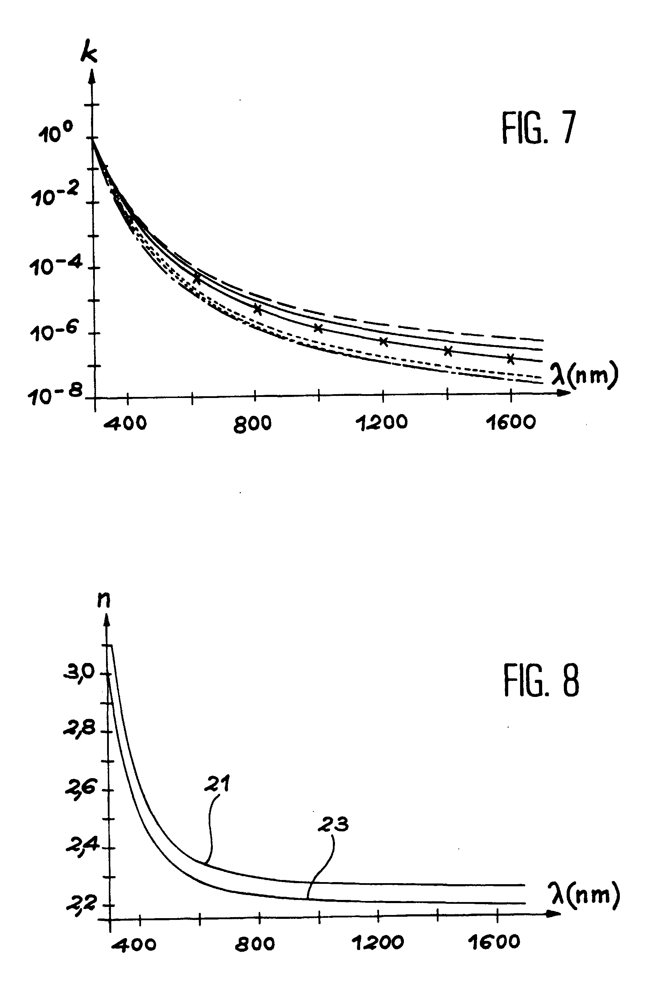

Sur les figures 5 et 6, l'axe des abscisses indique la longueur d'onde $\lambda$ en nm, l'axe des ordonnées indique l'indice de réfraction n du matériau, et sur la figure 7, il indique le coefficient k. La figure 5 a été réalisée avec $SiO_2$ et la figure 6 avec $TiO_2$. La légende indiquée sur la figure 5 est également valable pour les figures 6 et 7.

La référence 9 indique une évaporation simple, la référence 11 une évaporation assistée, la référence 13 une évaporation réactive, la référence 15 une évaporation réactive assistée, la référence 17 une évaporation assistée réactive et la référence 19 une évaporation réactive assistée réactive.

En ce qui concerne l'oxyde de silicium, il est à noter que la valeur du coefficient d'absorption k de $SiO_2$ est non mesurable par ellipsométrie car elle est inférieur à $10^{-3}$. $k_{SiO_2} = 0$ a donc été posé. L'indice de réfraction du $SiO_2$ varie peu en fonction des conditions de dépôt : à 600 nm, il varie de 1,46 à 1,485.

Cependant, les valeurs de n les plus faibles et les plus proches de celles du matériau massif sont obtenues dans le cas de l'évaporation simple, l'évaporation assistée, l'évaporation réactive et l'évaporation réactive assistée réactive.

Dans le cas du $TiO_2$, les valeurs de n les plus faibles sont observées dans le cas de l'évaporation simple et de l'évaporation réactive. C'est le plus fort contraste d'indice qu'il faut obtenir ; la méthode choisie est donc soit l'évaporation assistée, soit l'évaporation réactive assistée réactive.

Par ailleurs, l'absorption des couches d'oxyde de titane est la plus faible dans le cas de l'évaporation réactive, l'évaporation réactive assistée et l'évaporation réactive assistée réactive.

Par élimination, la méthode choisie est l'évaporation réactive assistée réactivement. C'est ce qui semble être le meilleur compromis entre un bon contraste d'indice et une faible absorption du $TiO_2$. Afin d'optimiser l'indice de ce dernier, l'énergie des ions irradiant le film ou la couche en cours de croissance a été augmentée au moyen d'un canon à ions.

La figure 8 représente la variation d'indice de réfraction en fonction de la tension du canon à ions. Sur cette figure, l'axe des abscisses indique l'indice de réfraction n, et l'axe des ordonnées, la longueur d'onde $\lambda$ en nm. Sur cette figure, la référence 21 indique la courbe obtenue avec une tension du canon à ions de 100 V et 2 A et la référence 23 : 160 V et 2 A.

Lorsque la tension du canon augmente, l'indice augmente. Si l'énergie est encore augmentée, une compétition apparaît entre le dépôt du matériau et son érosion par les ions. Par ailleurs, une plus forte énergie peut générer des défauts, sources d'absorption.

Les indices des films ou couches unitaires ont donc été déterminés par ellipsométrie en utilisant le modèle de Cauchy. Les paramètres obtenus sont les suivants :

|       | $A_n$  | $B_n$              | $C_n$              |
|-------|--------|--------------------|--------------------|
| $SiO_2$ | 1,455  | $3,33 \times 10^{-3}$ | 0                  |
| $TiO_2$ | 2,262  | $1,39 \times 10^{-2}$ | $4,1 \times 10^{-3}$ |

$A_n$, $B_n$ et $C_n$ étant les paramètres de Cauchy pour ces matériaux.

Pour ce qui concerne le coefficient d'absorption k du $TiO_2$, les valeurs des paramètres obtenues sont les suivantes :

$$A_k = 4,1 \times 10^{-3} , B_k = 5,7 , \lambda_0 = 0,4 \ \mu m.$$

Ces paramètres donnent une valeur de $k = 4,1 \times 10^{-3}$ à 400 nm.

Une fois que les valeurs d'indice des couches unitaires ont été déterminées, le filtre diélectrique a pu être réalisé.

## D. Calcul du filtre interférentiel dans le domaine visible

Les inventeurs ont choisi de traiter le problème en deux étapes : la première concernant le domaine visible, la seconde le domaine infrarouge. Les spécifications données ci-dessus dans chacun de ces deux domaines ont été déterminées à partir d'un film idéal sur le spectre complet de 300 à 3000 nm et ont une influence non négligeable les unes sur les autres.

Ils ont traité le domaine visible et déterminé les caractéristiques d'un filtre telles qu'elles répondent à certaines spécifications propres à ce domaine spectral ($T_{VIS}$, $T^o_{COUL}$). Ces caractéristiques ont été revues après la deuxième étape.

Les valeurs suivantes ont été utilisées comme point de départ :

$T \leq 0,1$ pour $\lambda \leq 400$ nm

$T \geq 0,9$ pour $440 \leq \lambda \leq 590$ nm

$T = 0,7$ pour $\lambda = 690$ nm

$T \leq 0,03$ pour $\lambda > 770$ nm

Cet ensemble de valeurs cibles décrit une fenêtre de transmission qui est schématisée sur la figure 2. Sur cette figure, T(%) représente la transmission en pourcent, et $\lambda$, la longueur d'onde en nm. Ils ont cherché à la retrouver par calcul en superposant des couches minces alternées de $SiO_2$ et $TiO_2$.

Pour toutes les architectures qui vont suivre, les épaisseurs sont données en épaisseur géométrique. Cette convention d'écriture a été expliquée précédemment.

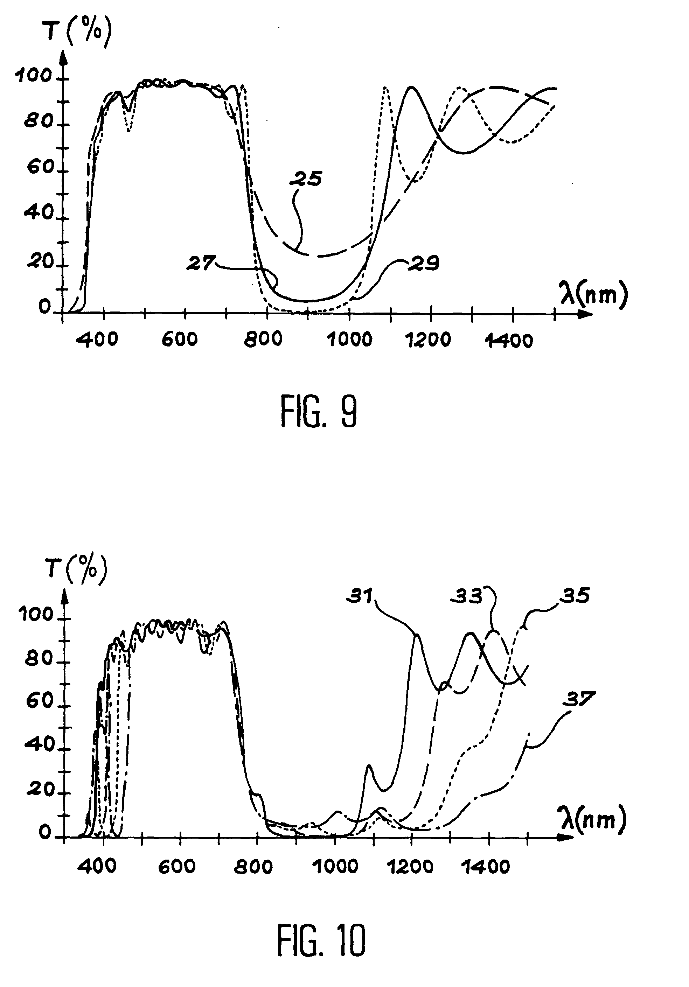

Ils ont cherché un empilement ayant une fenêtre de transmission entre 450 et 750 nm environ. Ils sont partis de l'architecture suivante : Air/N x (0,5L/H/0,5L)/substrat, qui donne les spectres de transmission représentés sur la figure 9 en fonction de la valeur de N.

Sur cette figure, l'axe des abscisses représente la longueur d'onde en nm et l'axe des ordonnées la transmission en pourcent. La référence 25 indique la courbe obtenue avec N = 3, la référence 27 avec N = 5 et la référence 29 avec N = 7.

On constate sur cette figure que l'accroissement du nombre d'empilements, donc de couches permet une transition plus abrupte entre transmission et réflexion. Ce phénomène sera discuté par la suite pour déterminer le meilleur compromis entre performances optiques du filtre et difficultés technologiques de réalisation.

Pour essayer d'élargir la zone de réjection du filtre, ici entre 800 et 1000 nm, il est possible de superposer à ce premier empilement un second, décalé vers les plus fortes longueurs d'onde. Il a donc été ajouté au premier groupe d'empilement, un deuxième identique centré à une longueur d'onde de référence $\lambda_1 = m\lambda_0$. En d'autres termes, les inventeurs ont multiplié les épaisseurs de ce deuxième groupe par m et considéré l'empilement total suivant à la longueur d'onde de référence $\lambda_0$ :

$$N \times (0,5L/H/0,5L) + N \times (0,5mL/mH/0,5mL).$$

Ils ont posé, dans un premier temps N=5 et le comportement du filtre en fonction de m a été analysé.

Les spectres de transmission calculés sont représentés sur la figure 10 en annexe. Sur cette figure, l'axe des abscisses indique la longueur d'onde en nm et l'axe des ordonnées, la transmission en pourcent. La référence 31 indique la courbe obtenue avec m = 1,1, la référence 33 avec m =1,2, la référence 35 avec m = 1,3 et la référence 37 avec m = 1,4.

m=1,3 a ainsi été choisi car cette valeur donne un bon compromis entre zone de réjection dans le proche infrarouge et transmission visible par rapport aux spécifications données.

Ce choix n'est pas primordial car il ne s'agit que d'une architecture de départ dont les épaisseurs de chaque couche seront ensuite modifiées par calcul.

Cette méthode peut être poursuivie en rajoutant un troisième groupe décalé vers les plus hautes longueurs d'onde. Plusieurs calculs ont été effectués dans ce sens mais les résultats n'ont pas été probants. En effet, un élargissement de la zone de réjection est constaté, mais la fenêtre de transmission est considérablement réduite et s'éloigne trop des spécifications de départ. De plus, le nombre de couches à déposer augmente ce qui ne va pas dans le sens de la réduction des coûts de traitement.

En revanche, il est possible d'augmenter le nombre de couches de chaque groupe pour obtenir une fenêtre de transmission aux pentes plus abruptes.

**E. Choix du réflecteur infrarouge**

Le matériau réflecteur infrarouge choisi dans cet exemple est de l'oxyde d'indium dopé à l'étain (ITO). Les propriétés optiques des couches d'ITO déposées ont été modélisées. Les inventeurs ont cherché à retrouver les valeurs des indices n et k du matériau et ainsi ont pu calculer les spectres de réflexion et de transmission de l'empilement total filtre visible + filtre IR.

1. Modélisation des propriétés optiques de l'ITO

Les propriétés optiques des couches d'ITO déposées ont été modélisées. Les inventeurs ont cherché à retrouver les valeurs des indices n et k du matériau et ainsi ils ont pu calculer les spectres de réflexion et transmission de l'empilement total, c'est-à-dire filtre visible + filtre IR.

Le modèle de Drude rend compte de la présence de porteurs libres dans les matériaux réflecteurs en particulier des métaux. Couplé avec le modèle de Lorentz qui considère la présence de porteurs liés dans les matériaux diélectriques, il permet de modéliser les propriétés optiques de matériaux comme l'ITO. Les indices n et k du matériau, puis les spectres de réflexion et de transmission à partir de la fonction diélectrique issue de ce modèle ont été calculés.

La méthode est la suivante : des valeurs de départ des paramètres $\gamma$ et $\omega_p$ du modèle de Drude des équations de la fonction diélectrique, ont été choisies puis n et k de la couche modélisée puis R et T de l'ensemble couche/substrat ont été calculés. Une minimisation numérique par méthode des moindres carrés converge vers les paramètres du modèle tels que spectres calculés et expérimentaux soient superposés au mieux.

L'épaisseur de la couche a également été déterminée par calcul puis comparée à la mesure. Ces paramètres finaux ont donné un spectre de dispersion des valeurs de n et k qui a permis d'extrapoler les propriétés optiques de la couche à une épaisseur quelconque. Plusieurs ITO de nature différente ont ainsi été modélisées.

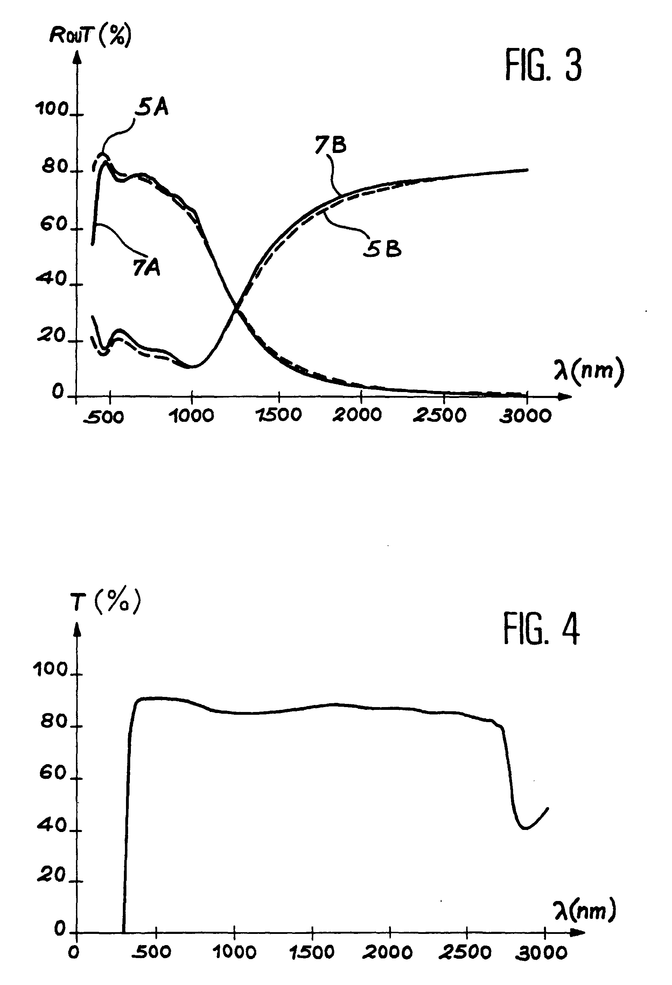

La figure 3 en annexe montre la superposition entre les spectres expérimentaux en réflexion et transmission et recalculés ou modélisés pour l'un d'entre eux. Sur cette figure, l'axe des abscisses représente la longueur d'onde $\lambda$ en nm, l'axe des ordonnées représente la transmission ou la réflexion en pourcent. Sur cette figure, les courbes référencées 5A et 5B représentent respectivement les spectres de transmission et de réflexion calculés par le modèle de Drude et les courbes référencées 7A et 7B représentent respectivement les spectres de transmission et de réflexion obtenus selon l'invention.

Un bon accord entre l'expérience et le calcul notamment dans la partie infrarouge du spectre peut être constaté.

Le domaine des plus courtes longueurs d'onde est moins bien simulé probablement parce que l'absorption du substrat verre est sous-estimée. De plus, le calcul ne prend pas en compte le début de l'absorption du matériau aux plus grandes énergies, proches de son "gap". Cette absorption visible a été, dans un premier temps, négligée pour prédire l'épaisseur de réflecteur nécessaire à la fabrication du filtre. Par la suite, lorsque l'empilement a été déposé, il a été vérifié que cette absorption est négligeable.

2. Etude des paramètres de dépôt de la couche d'ITO : influence du recuit

L'oxyde d'indium dopé à l'étain a été déposé par pulvérisation cathodique magnétron sur verre, à partir d'une cible frittée dont la composition est de 10% en masse d'oxyde d'étain dans $In_2O_3$. La qualité optique de cet oxyde déposé en couche mince dépend du taux d'oxygène dans le film ainsi que de son état cristallin.

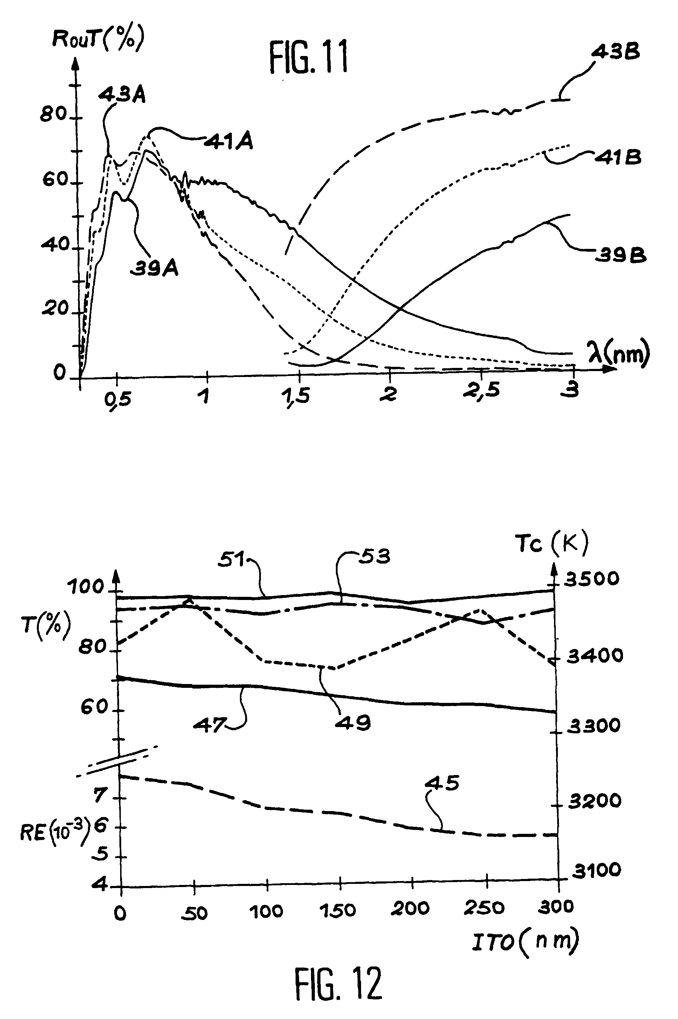

Pour conserver la même stoechiométrie que celle de l'oxyde massif, il est nécessaire d'ajouter un certain pourcentage d'oxygène dans l'enceinte lors du dépôt. La figure 11 en annexe illustre l'effet du recuit d'une couche d'ITO sur les propriétés optiques de réflexion et de transmission de cette couche.

Sur cette figure, l'axe des abscisses indique la longueur d'onde $\lambda$ en nm, et l'axe des ordonnées, la réflexion ou la transmission en pourcent. Les références 39A et 39B indiquent respectivement les spectres de transmission et de réflexion de l'ITO sans recuit, les références 41A et 41B indiquent respectivement les spectres de transmission et de réflexion de l'ITO avec un recuit à 200°C, et les références 43A et 43B indiquent respectivement les spectres de transmission et de réflexion de l'ITO avec un recuit à 300°C. Ces spectres ont été obtenus après une optimisation de la teneur en oxygène.

Le traitement thermique à 200°C ne suffit pas pour remplir les spécifications du filtre infrarouge. A 300°C, l'oxyde devient réflecteur à 80% dans l'infrarouge et la longueur d'onde de coupure est à 1,3 $\mu$m. Les propriétés optiques de ce matériau sont alors optimisées.

**F. Expression quantitative des spécifications données ci-dessus :**

Les spécifications relatives aux performances du filtre sont au nombre de 5. Le tableau 3 ci-dessous reprend les valeurs à atteindre ainsi que celles obtenues avec le filtre verre dopé de l'art antérieur.

Tableau 3

| Spécifications recherchées comparées aux performances obtenues par l'ensemble filtre verre dopé | | |
|---|---|---|
| Définition | Spécifications recherchées | Filtre verre dopé |
| Radian énergétique RE | $\leq$ 4,5 mW/m$^2$.Lux | 2,5 à 4 |
| Transmission moyenne visible $T_{Vis}$ | $\geq$ 60 | 61,1 |
| Température de couleur $T_{COUL}$ | entre 3500 et 4000 K | 3583 |
| Indice de rendu de couleur IRC ou $R_A$ | $\geq$ 90 | 96,9 |
| $R_9$ | $\geq$ 50 | 82,9 |

**G. Détermination des différentes couches de l'architecture retenue**

Les inventeurs ont étudié les performances de l'empilement en fonction de l'épaisseur de l'ITO. Pour chaque valeur d'épaisseur, la partie diélectrique a été recalculée afin de s'approcher au mieux des spécifications recherchées et surtout de limiter les effets d'oscillation de la transmission dans la partie visible du spectre.

Les épaisseurs de chaque couche ont ainsi été recalculées mais restent liées entre elles. En fait, les coefficients multiplicateurs des deux groupes ont été calculés par rapport à la longueur d'onde de référence. Enfin, après cette optimisation, les 5 grandeurs précédentes ont été recalculées.

Les résultats obtenus sont regroupés sur la figure 12 en annexe. Sur cette figure, l'axe des abscisses représente l'épaisseur d'ITO en nm, l'axe des ordonnées de gauche représente dans la partie inférieure le radian énergétique en mW/m$^2$.Lux, et dans la partie supérieure le pourcentage de transmission et l'axe des ordonnées de droite représente la température de couleur en K.

En fonction de l'épaisseur de la couche d'ITO, la référence 45 indique la courbe de variation du radian énergétique RE, la référence 47 indique la courbe de variation de transmission T dans le visible, la référence 49 indique la variation de la température de couleur Tc, la référence 51 indique la variation de l'indice de rendu de couleur Ra, et la référence 53 indique la variation de l'indice de rendu de couleur dans le rouge $R_9$.

Les deux grandeurs intéressantes en priorité sont le radian énergétique et la transmission moyenne visible. On constate qu'elles vont en sens inverse. En effet, on diminue la valeur de RE en augmentant l'épaisseur d'ITO ce qui entraîne une réduction de la transmission IR, qui s'accompagne donc d'une diminution de la transmission visible. Ainsi, pour une épaisseur d'ITO de 250 nm, la limite basse de transmission visible, c'est-à-dire 60% est atteinte alors que le radian énergétique est encore largement supérieur à 5.

Les objectifs ne sont pas atteints avec l'empilement multicouche diélectrique + ITO précité, la solution initiale a donc été modifiée.

L

Comme constaté sur la figure 9 en annexe, en augmentant le nombre de couches de chaque empilement, la frontière entre zone transparente et zone de réjection devient plus abrupte et le filtrage de cette dernière plus efficace. Cette remarque est d'autant plus importante que la source lumineuse est très énergétique dans cette zone.

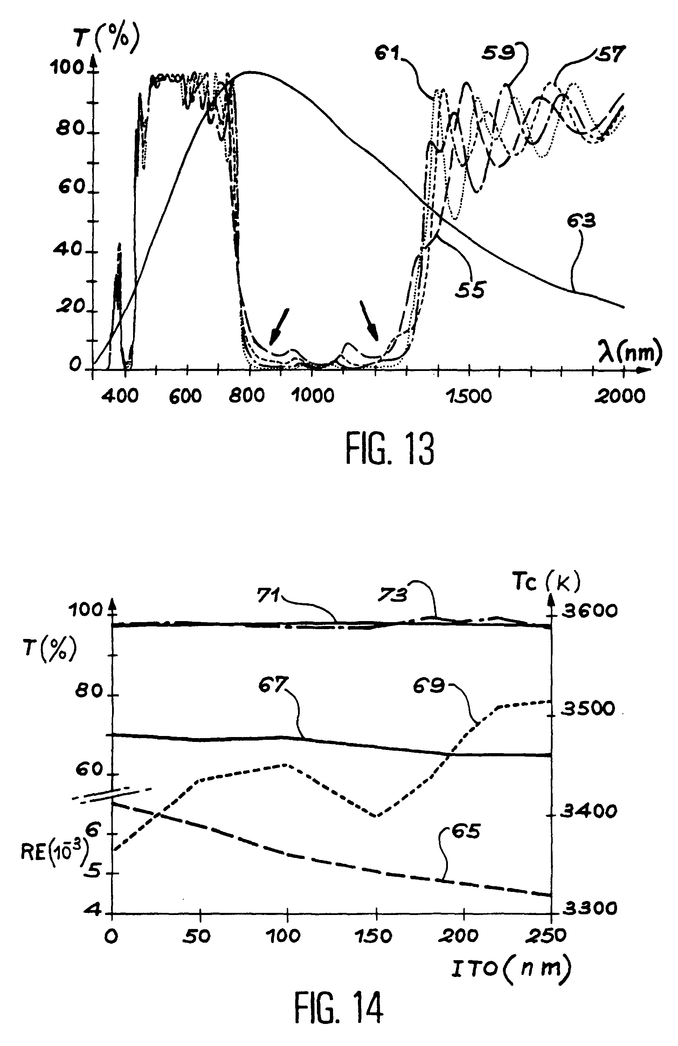

Le nombre de couches par groupe a donc été augmenté de manière à réduire encore le niveau de transmission entre 750 et 1200 nm et donc le radian énergétique comme le montre la figure 13 en annexe.

Cette figure illustre l'amélioration des performances de filtrage de l'architecture avec le nombre d'empilements. L'axe des abscisses représente la longueur d'onde $\lambda$ en nm et l'axe des ordonnées la transmission en pourcent. Les références 55, 57, 59 et 61 indiquent respectivement les courbes obtenues avec N = 5, N = 6, N = 7 et N = 8. La référence 63 indique le spectre d'émission de la lampe source et les flèches indiquent l'importance du radian énergétique.

Pour améliorer la solution, un degré de liberté supplémentaire a été nécessaire en laissant libres, pendant le calcul, les épaisseurs de chaque couche indépendamment les unes des autres.

Les performances du filtre notamment dans la forme de la fenêtre de transmission visible peuvent être améliorées.

Partant toujours de l'architecture initiale N x (0,5L/H/0,5L) + N x (0,65L/1,3H/0,65L)/ITO/Substrat, plusieurs études paramétriques en fonction de l'épaisseur d'ITO ont été entreprises avec, à chaque fois, un nombre de couches différents : N=6, 7, 8, etc... et des épaisseurs re-optimisées indépendamment.

Pour atteindre les spécifications ci-dessus, les calculs montrent qu'il faut 33 couches au total, c'est-à-dire N=8.

L'étude paramétrique, conduisant à cette solution et donnant l'épaisseur d'ITO nécessaire, est proposée sur la figure 14 en annexe. Sur cette figure, l'axe des abscisses représente l'épaisseur d'ITO en nm, l'axe des ordonnées de gauche représente dans sa partie inférieure, le radian énergétique en $mW/m^2.Lux$, et dans sa partie supérieure, la transmission en pourcent et l'axe des ordonnées de droite représente la température de couleur en K.

En fonction de l'épaisseur de la couche d'ITO, la référence 65 indique la courbe de variation du radian énergétique RE, la référence 67 indique la courbe de variation de la transmission T dans le visible, la référence 69 indique la variation de la température de couleur Tc, la référence 71 indique la variation de l'indice de rendu de couleur RA et la référence 73 indique la variation de l'indice de rendu de couleur dans le rouge $R_9$.

Une épaisseur d'ITO de 250 nm permet d'atteindre un radian énergétique inférieur ou égal à 4,5.

Toutes les spécifications sont alors atteintes puisque l'on a :
RE = 4,45, $T_{COUL}$ = 3514, $T_{VIS}$ = 65,3, $R_A$ = 97,3, $R_9$ =,97,0

Le spectre de transmission théorique est proposé sur la figure 15 en annexe. Cette figure est décrite ci-dessous.

## H. Fabrication du filtre de la présente invention

### 1. Le substrat

Les substrats en forme de trapèze sont en verre standard. Cette découpe permet de tester en grandeur réelle un ensemble de 6 pièces assemblées autour d'une lampe source, dans les conditions opérationnelles.

Ce verre a été caractérisé en ellipsométrie et en transmission. Son épaisseur est de 2 mm et le spectre de transmission d'un échantillon nu est proposé sur la figure 4 en annexe. Sur cette figure, T représente la transmission en pourcent et $\lambda$ la longueur d'onde en nm.

De ces caractéristiques, les propriétés optiques n et k ont été extraites afin de calculer précisément le spectre de transmission totale du filtre sur ce substrat.

### 2. Le dépôt

Dans un premier temps, la couche d'ITO est déposée sur le substrat verre par pulvérisation cathodique magnétron réactive. Elle est recuite à 300°C sous atmosphère $N_2$ pendant 1 heure. Les spectres en transmission et réflexion sont mesurés afin de vérifier que l'ITO possède les bonnes caractéristiques optiques.

L'empilement $SiO_2/TiO_2$ est ensuite déposé par évaporation comme décrit auparavant. La vitesse de dépôt des couches est contrôlée par une balance à quartz qui pilote les canons à ions et à électrons. Le dépôt des 33 couches diélectriques dure environ 6 heures.

L'empilement obtenu est donné dans le tableau 4 suivant :

Tableau 4

| Empilement obtenu | | |
|---|---|---|
| Couche | Matériau | Epaisseur (nm) |
| **34** | **SiO₂** | 64 |
| 33 | TiO₂ | 85 |
| 32 | SiO₂ | 155 |
| 31 | TiO₂ | 89 |
| 30 | SiO₂ | 147 |
| 29 | TiO₂ | 87 |
| 28 | SiO₂ | 144 |
| 27 | TiO₂ | 87 |
| 26 | SiO₂ | 153 |
| 25 | TiO₂ | 85 |
| 24 | SiO₂ | 145 |
| 23 | TiO₂ | 91 |
| 22 | SiO₂ | 149 |
| 21 | TiO₂ | 91 |
| 20 | SiO₂ | 157 |
| 19 | TiO₂ | 94 |
| 18 | SiO₂ | 169 |
| 17 | TiO₂ | 112 |
| 16 | SiO₂ | 189 |
| 15 | TiO₂ | 121 |
| 14 | SiO₂ | 191 |
| 13 | TiO₂ | 125 |
| 12 | SiO₂ | 193 |
| 11 | TiO₂ | 123 |
| 10 | SiO₂ | 192 |
| 9 | TiO₂ | 124 |
| 8 | SiO₂ | 199 |
| 7 | TiO₂ | 124 |
| 6 | SiO₂ | 197 |
| 5 | TiO₂ | 128 |
| 4 | SiO₂ | 190 |
| 3 | TiO₂ | 119 |
| 2 | SiO₂ | 172 |
| 1 | ITO | 250 |
| Substrat | Verre | |

3. Résultats expérimentaux - calculs des différents paramètres

Le spectre de transmission obtenu sur l'empilement fabriqué est proposé sur la figure 15 en annexe et superposé au spectre théorique. Sur cette figure, l'axe des abscisses représente la longueur d'onde en nm et l'axe des ordonnées la transmission en pourcent. La référence 75 indique le spectre théorique, et la référence 77 le spectre expérimental obtenu.

Deux choses peuvent être constatées :

- le niveau de transmission visible, $T_{VIS}$=51% est inférieur à la valeur attendue de 65%, et
- il existe un léger décalage de 30 nm environ vers les plus faibles longueurs d'onde.

Pour ce qui est de la première remarque, on peut penser que le $TiO_2$ final est probablement plus absorbant que la valeur déterminée par les mesures ellipsométriques sur couches unitaires. Une modification de quelques $10^{-3}$

suffit à diminuer la transmission de l'empilement complet de plus de 10%. Les moyens de caractérisation utilisés, en limite de sensibilité, n'ont pas permis de déterminer k avec plus de précision.

Le décalage de la fenêtre de transmission vers les plus faibles longueurs d'onde vient d'une certaine imprécision dans le contrôle des épaisseurs durant la croissance. Cela est confirmé par une mesure mécanique de marche sur le bord du filtre qui indique 4,26 µm au lieu des 4,49 µm prévus.

Un industriel équipé en mesure optique in situ pourra facilement résoudre cette marge d'incertitude.

Le tableau 5 regroupe les valeurs des paramètres calculés avec cet empilement expérimental. On constate, mis à part ce problème de transmission visible, que toutes ces valeurs répondent aux spécifications recherchées.

Tableau 5

| Spécifications demandées, résultats théoriques et expérimentaux | | |
|---|---|---|
| | Valeurs théoriques | Valeurs expérimentales |
| Radian énergétique RE (mW/m$^2$/Lux) | 4,45 | 3,92 |
| Transmission moyenne visible $T_{VIS}$ | 65,3% | 50,8% |
| Température de couleur $T_{COUL}$ | 3514 | 3490 |
| Indice de rendu de couleur IRC ou $R_A$ (normes CIE*) | 97,3 | 97,4 |
| $R_9$ (normes CIE*) | 97,0 | 89,2 |

\* Compagnie Internationale d'Eclairage

Ces résultats montrent que la réalisation d'un tel filtre est démontrée théoriquement et expérimentalement.

**Exemple 2 : Filtre de la présente invention dans lequel le filtre interférentiel est un filtre SiO$_2$/Si$_3$N$_4$**

Le filtre SiO$_2$/Si$_3$N$_4$ a été déposé par plasma micro-onde IDECR ("Integrated Distributed Electron Cyclotron Resonnance"). L'intérêt d'un tel dispositif est le dépôt à basse température. En effet, il est possible de déposer une couche de SiO$_2$ sur un substrat de polycarbonate présentant de bonnes qualités optiques. Par ailleurs, la configuration géométrique de ce type de réacteur autorise le dépôt sur de grandes surfaces.

Comme pour le couple TiO$_2$/SiO$_2$, les indices des nitrure et oxyde de silicium en monocouche ont été déterminés. Utilisant leurs spectres de dispersion pour le calcul du spectre de transmission, l'empilement suivant de 25 couches sur verre (L : SiO$_2$, H : Si$_3$N$_4$) a été réalisé :

$$6 \times (0,5L/H/0,5L) + 6 \times (0,65L/1,3H/0,65L)$$

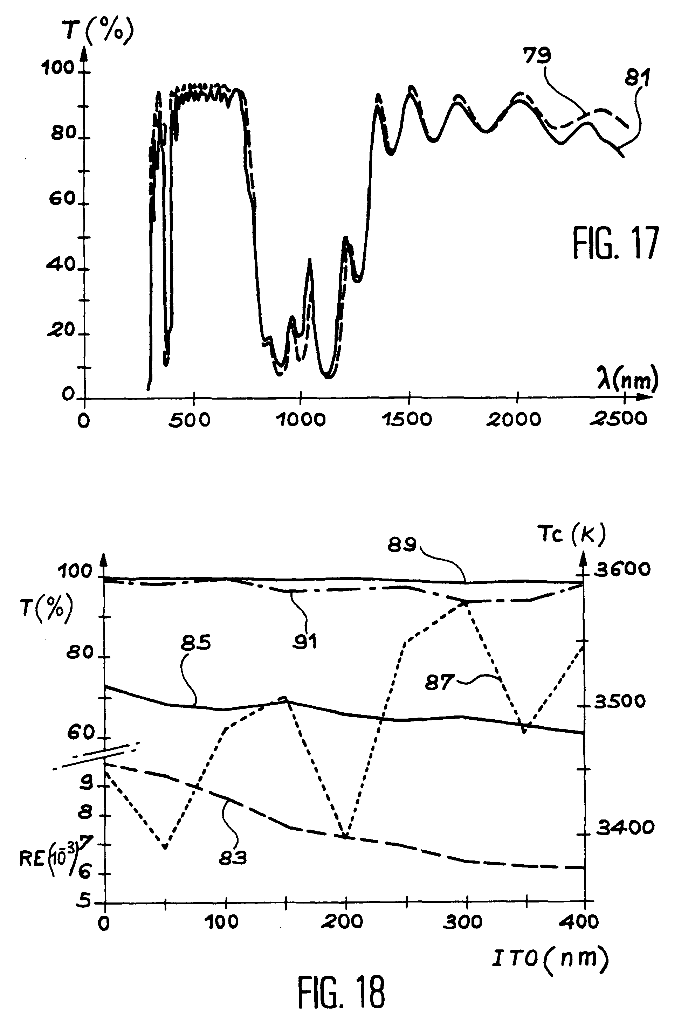

La figure 17 en annexe regroupe les spectres de transmission théorique et expérimentale de l'empilement réalisé. Sur cette figure, l'axe des abscisses représente la longueur d'onde λ en nm et l'axe des ordonnées représente la transmission dans le visible en pourcent. La référence 79 indique le spectre théorique et la référence 81 indique le spectre expérimental.

On constate de très bons résultats en longueur d'onde, au moins dans la partie visible du spectre. Cette opération permet, d'une part, de valider les calculs prédictifs des spectres de transmission des empilements choisis et, d'autre part, de constater la bonne maîtrise des épaisseurs durant les dépôts. En effet, lorsque l'épaisseur des couches est contrôlée in situ par ellipsométrie, il est possible de réagir sur l'équipement à la moindre dérive.

Dans une autre expérience, la même architecture que pour le couple SiO$_2$/TiO$_2$ a été reprise, les performances d'un tel filtre en fonction de l'épaisseur d'ITO ont été calculées. Les indices mesurées des deux matériaux diélectriques sont les suivants :

$$\text{à } 600 \text{ nm et } k = 0 \; : \; \begin{cases} n_{SiO_2} = 1,458 \\ n_{TiO_2} = 1,916 \end{cases}$$

L'empilement suivant a été réalisé sur un substrat de verre :

$$8 \times (0,5L/H/0,5L) + 8 \times (0,65L/1,3H/0,65L)/ITO$$

Les résultats obtenus sont présentés sur la figure 18 en annexe. Sur cette figure, l'axe des abscisses représente l'épaisseur d'ITO en nm, l'axe des ordonnées de gauche, dans sa partie inférieure représente le radian énergétique en mW/m$^2$.Lux et dans sa partie supérieure la transmission en pourcent, et l'axe des ordonnées de droite représente la température de couleur en K. En fonction, de l'épaisseur de la couche d'ITO, la référence 83 indique la courbe de variation du radian énergétique RE, la référence 85 indique la courbe de variation de la transmission T dans le visible, la référence 87 indique la variation de la température de couleur Tc, la référence 89 indique la variation de l'indice de rendu de couleur RA et la référence 91 indique la variation de l'indice de rendu de couleur dans le rouge $R_9$.

On constate que pour une épaisseur de 400 nm d'ITO, on obtient une transmission visible proche de 60% mais un radiant énergétique de 6,12.

Il était prévisible que les performances d'un tel filtre soient inférieures à celle de l'empilement $SiO_2/TiO_2$ pour le même nombre de couches puisque le contraste d'indice du couple $SiO_2/Si_3N_4$ est nettement plus faible : $\Delta n$ environ égal à 0,5 à 600 nm. Les performances de ce filtre peuvent être améliorées, par exemple en augmentant le nombre de courbes.

**Conclusion**

Les inventeurs ont déterminé un canevas d'architecture permettant de répondre à des spécifications demandées dans le domaine visible. Dans les exemples, ils ont choisi notamment le couple de matériaux diélectriques à fort contraste d'indice $TiO_2/SiO_2$. Après caractérisation de couches unitaires, ils ont défini la méthode de croissance et les paramètres de dépôt.

La deuxième partie de ce travail consistait à définir et déposer un matériau réflecteur infrarouge permettant de filtrer tout rayonnement après 1,5 µm et ne perturbant pas les propriétés optiques du filtre diélectrique. L'ITO répond à ces spécifications. Ils ont déterminé les paramètres de dépôt et appliqué un traitement thermique après dépôt, afin d'optimiser le matériau.

Pour l'autre voie explorée $SiO_2/Si_3N_4$ déposés par plasma, les empilements calculés et réalisés ne sont pas suffisamment performants à cause du faible contraste d'indice. L'augmentation du nombre de couches peut permettre d'améliorer les filtres.

Une maquette a été réalisée puis caractérisée. Les résultats obtenus sont peu différents de ceux attendus. En effet, un plus faible niveau de transmission dans le domaine visible et un léger décalage spectral de la réponse du filtre ont été observés. Un industriel possédant des installations équipées d'instruments de caractérisation in situ lui permettant d'agir sur les paramètres de dépôt en cours de croissance saura atteindre exactement les spécifications demandées.

**Revendications**

1.   Filtre anticalorique comprenant un substrat, au moins une couche d'un matériau réflecteur infrarouge, et un revêtement formant un filtre interférentiel dans le domaine visible, **caractérisé en ce que** le revêtement formant un filtre interférentiel dans le domaine visible comprend au moins deux groupes d'empilement différents, dans lequel un premier groupe d'empilement présente une alternance d'un premier film et d'un deuxième film répétée N fois et dans lequel un deuxième groupe d'empilement présente une alternance d'un troisième film et d'un quatrième film répétée N fois, le premier et/ou le deuxième film(s) se différenciant respectivement du troisième et/ou du quatrième filma(s) par son/leur épaisseur, le premier et le troisième films ayant une épaisseur L ou multiple de L et étant constitué d'un premier matériau ayant un indice de réfraction $n_1$, et le deuxième et le quatrième filma ayant une épaisseur H ou multiple de H et étant constitué d'un deuxième matériau ayant un indice de réfraction, $n_2$, dans lequel N est un nombre entier ≥3 et H et L sont des épaisseurs géométriques, et dans lequel N, H, L, $n_1$ et $n_2$ sont tels que le revêtement formant un filtre interférentiel présente une fenêtre de transmission située entre 400 et 800 nm.

2.   Filtre anticalorique selon la revendication 1, dans lequel la couche du matériau réflecteur infrarouge recouvre au moins une surface du substrat, et le revêtement formant un filtre interférentiel dans le domaine visible recouvre ladite couche du matériau réflecteur infrarouge.

3.   Filtre selon la revendication 1 ou 2, dans lequel le matériau réflecteur infrarouge est un oxyde conducteur transparent.

4.   Filtre selon la revendication 1 ou 2, dans lequel le matériau réflecteur infrarouge est de l'oxyde d'indium dopé à l'étain.

**5.** Filtre selon la revendication 4, dans lequel l'oxyde d'indium dopé à l'étain présente un rapport Sn/In allant d'environ 9 à environ 11% en masse.

**6.** Filtre selon la revendication 5, dans lequel le premier matériau est $SiO_2$ et dans lequel le deuxième matériau est $TiO_2$.

**7.** Filtre selon la revendication 6, dans lequel le revêtement formant un filtre interférentiel dans le domaine visible comprend un premier groupe d'empilement présentant une alternance de type 0,5L/H/0,5L répétée 8 fois.

**8.** Filtre selon la revendication 7, comprenant en outre un deuxième groupe d'empilement présentant une alternance de type 0,65L/1,3H/0,65L répétée 8 fois.

**9.** Filtre selon la revendication 5, dans lequel le premier matériau est $SiO_2$ et dans lequel le deuxième matériau est $Si_3N_4$.

**10.** Filtre selon la revendication 9, dans lequel le revêtement formant un filtre interférentiel dans le domaine visible comprend un premier groups d'empilement présentant une alternance de type 0,5L/H/0,5L répétée 6 fois.

**11.** Filtre selon la revendication 10 comprenant en outre un deuxième groupe d'empilement présentant une alternance de type 0,65L/1,3H/0,65L répétée 6 fois.

**12.** Filtre auticalorique selon la revendication 2, dans lequel le substrat est un substrat de verre, la couche d'oxyde conducteur transparent est une couche d'oxyde d'indium dopée à l'étain, et le revêtement formant un filtre interférentiel dans le domaine visible est un empilement dans lequel alternent des films de $SiO_2$ et des films de $TiO_2$, l'empilement commençant par un film de $SiO_2$ déposé sur la couche d'ITO et se terminant par un film de $SiO_2$ en contact avec l'atmosphère, ledit empilement comprenant 17 films de $SiO_2$ et 16 films de $TiO_2$.

**13.** Filtre anticalorique selon la revendication 1, dans lequel le substrat est un substrat de verre ou de plastique.

**14.** Filtre anticalorique comprenant un substrat de verre, une couche d'ITO, et un revêtement formant un filtre interférentiel dans le domaine du visible **caractérisée en ce qu'**il comprend deux groupes d'empilement différents de films de $SiO_2$ et de films de $TiO_2$, dans lequel chaque groupe d'empilement présente une alternance de films de $SiO_2$ et de films de $TiO_2$ répétée 8 fois, ledit filtre ayant la structure suivante :

| Couche | Matériau | Epaisseur (nm) |
|---|---|---|
| **34** | **$SiO_2$** | 64 |
| 33 | $TiO_2$ | 85 |
| 32 | $SiO_2$ | 155 |
| 31 | $TiO_2$ | 89 |
| 30 | $SiO_2$ | 147 |
| 29 | $TiO_2$ | 87 |
| 28 | $SiO_2$ | 144 |
| 27 | $TiO_2$ | 87 |
| 26 | $SiO_2$ | 153 |
| 25 | $TiO_2$ | 85 |
| 24 | $SiO_2$ | 145 |
| 23 | $TiO_2$ | 91 |
| 22 | $SiO_2$ | 149 |
| 21 | $TiO_2$ | 91 |
| 20 | $SiO_2$ | 157 |
| 19 | $TiO_2$ | 94 |
| 18 | $SiO_2$ | 169 |
| 17 | $TiO_2$ | 112 |
| 16 | $SiO_2$ | 189 |
| 15 | $TiO_2$ | 121 |

(suite)

| Couche | Matériau | Epaisseur (nm) |
|--------|----------|----------------|
| 14 | $SiO_2$ | 191 |
| 13 | $TiO_2$ | 125 |
| 12 | $SiO_2$ | 193 |
| 11 | $TiO_2$ | 123 |
| 10 | $SiO_2$ | 192 |
| 9 | $TiO_2$ | 124 |
| 8 | $SiO_2$ | 199 |
| 7 | $TiO_2$ | 124 |
| 6 | $SiO_2$ | 197 |
| 5 | $TiO_2$ | 128 |
| 4 | $SiO_2$ | 190 |
| 3 | $TiO_2$ | 119 |
| 2 | $SiO_2$ | 172 |
| 1 | ITO | 250 |
| Substrat | Verre | |

**15.** Système optique choisi dans le groupe comprenant une lampe, une lampe de bureau, un système d'éclairage par fibres optiques, un vitrage, un système de projection optique et une ampoule, **caractérisé en ce qu'**il comprend un filtre selon l'une quelconque des revendications 1 à 14 précédentes.

**16.** Eclairage opératoire ou lampe de soins **caractérisé en ce qu'**il comprend un filtre anticalorique selon l'une quelconque des revendications 1 à 14 précédentes.

**17.** Procédé de fabrication du filtre anticalorique **caractérisé en ce qu'**il comprend les étapes consistant à :

a) fournir un substrat,
b) déposer sur au moins une surface dudit substrat une couche d'un matériau réflecteur infrarouge,
c) déposer sur ladite couche du matériau. infrarouge un revêtement formant un filtre interférentiel dans le domaine visible tel qu'il est défini dans la revendication 1 précédente.

**18.** Procédé selon la revendication 17, dans lequel le matériau réflecteur infrarouge étant de l'oxyde d'indium dopé à l'étain, il est déposé par pulvérisation cathodique magnétron sur le substrat.

**19.** Procédé selon la revendication 18, dans lequel la pulvérisation cathodique magnétron est réalisée à partir d'une cible frittée dont la composition est d'environ 9 à environ 11% en masse d'oxyde d'étain dans $In_2O_3$.

**20.** Procédé selon la revendication 18 comprenant en outre une étape $a_1$) de recuit du matériau réflecteur infrarouge déposé sur le substrat.

**21.** Procédé selon la revendication 17, dans lequel le filtre interférential étant celui défini dans la revendication 7 précédente, l'étape c) de dépôt du filtre interférentiel est une étape de dépôt des films réalisée par une technique d'évaporation sous vide ou de pulvérisation cathodique.

**22.** Procédé selon la revendication 17, dans lequel l'étape de dépôt des films est réalisée par évaporation réactive assistée réactive.

**23.** Procédé selon la revendication 17, dans lequel le filtre interférentiel étant celui défini dans la revendication 10 précédente, l'étape c) de dépôt du filtre interférentiel est une étape de dépôt des films réalisée par une technique de dépôt plasma.

**Patentansprüche**

1. Wärmeabsorbierender Filter mit einem Substrat, wenigstens einer Schicht aus einem IR-reflektierenden Material und einem Überzug, der einen Interferenzfilter im sichtbaren Bereich bildet,
**dadurch gekennzeichnet, dass** der einen Interferenzfilter im sichtbaren Bereich bildende Überzug wenigstens zwei unterschiedliche Stapelgruppen umfasst, wobei eine erste Stapelgruppe eine N-mal wiederholte Abwechslung eines ersten Films und eines zweiten Films aufweist, eine zweite Stapelgruppe eine N-mal wiederholte Abwechslung eines dritten Films und eines vierten Films aufweist, und der erste und/oder der zweite Film sich jeweils vom dritten und/oder vierten Film durch ihre Dicke unterscheiden, der erste und der dritte Film eine Dicke L oder ein Vielfaches von L haben und durch ein erstes Material mit einer Brechzahl $n_1$ gebildet werden, und das zweite und das vierte Material eine Dicke H oder ein Vielfaches von H haben und durch ein zweites Material mit einer Brechzahl $n_2$ gebildet werden, bei dem N eine ganze Zahl $\geq 3$ ist und H und L geometrische Dicken sind, und bei dem N, H, L, $n_1$ und $n_2$ derartig sind, dass der einen Interferenzfilter bildende Überzug ein Transmissionsfenster zwischen 400 und 800 nm aufweist.

2. Wärmeabsorbierender Filter nach Anspruch 1, bei dem die Schicht aus IRreflektierendem Material wenigstens eine Oberfläche des Substrats bedeckt, und der einen Interferenzfilter im sichtbaren Bereich bildende Überzug die genannte Schicht aus IRreflektierendem Material bedeckt.

3. Filter nach Anspruch 1 oder 2, bei dem das IR-reflektierende Material ein transparentes leitfähiges Oxid ist.

4. Filter nach Anspruch 1 oder 2, bei dem das IR-reflektierende Material Zinndotiertes Indiumoxid ist.

5. Filter nach Anspruch 4, bei dem das Zinn-dotierte Indiumoxid ein Sn/In-Verhältnis aufweist, das von ungefähr 9 bis ungefähr 11 Massenprozent geht.

6. Filter nach Anspruch 5, bei dem das erste Material $SiO_2$ ist und das zweite Material $TiO_2$ ist.

7. Filter nach Anspruch 6, bei dem der einen Interferenzfilter im sichtbaren Bereich bildende Überzug eine erste Stapelgruppe umfasst, die eine 8-mal wiederholte Abwechslung des Typs 0,5L/H/0,5L aufweist.

8. Filter nach Anspruch 7, außerdem eine zweite Stapelgruppe umfassend, die eine 8-mal wiederholte Abwechslung des Typs 0,65L/1,3H/0,65L aufweist.

9. Filter nach Anspruch 5, bei dem das erste Material $SiO_2$ ist und das zweite Material $Si_3N_4$ ist.

10. Filter nach Anspruch 9, bei dem der einen Interferenzfilter im sichtbaren Bereich bildende Überzug eine erste Stapelgruppe mit einer 6-mal wiederholten Abwechslung des Typs 0,5L/H/0,5L aufweist.

11. Filter nach Anspruch 10, außerdem eine zweite Stapelgruppe umfassend, die eine 6-mal wiederholte Abwechslung des Typs 0,65L/1,3H/0,65L aufweist.

12. Wärmeabsorbierender Filter nach Anspruch 2, bei dem das Substrat ein Glassubstrat ist, die transparente leitfähige Schicht eine Zinn-dotierte Indiumoxidschicht ist, und der einen Interferenzfilter im sichtbaren Bereich bildende Überzug ein Schichtenstapel ist, in dem $SiO_2$-Filme und $TiO_2$-Filme abwechseln, wobei der Schichtenstapel mit einem $SiO_2$-Film, abgeschieden auf der ITO-Schicht, beginnt und mit einem $SiO_2$-Film in Kontakt mit der Atmosphäre endet und dieser Schichtenstapel dabei 17 $SiO_2$-Filme und 16 $TiO_2$-Filme umfasst.

13. Wärmeabsorbierender Filter nach Anspruch 1, bei dem das Substrat ein Glas- oder Kunststoffsubstrat ist.

14. Wärmeabsorbierender Filter mit einem Glassubstrat, einer ITO-Schicht und einem einen Interferenzfilter im sichtbaren Bereich bildenden Überzug, **dadurch gekennzeichnet, dass** er zwei unterschiedliche Stapelgruppen von $SiO_2$-Filmen und von $TiO_2$-Filmen umfasst, wobei jede Stapelgruppe eine 8-mal wiederholte Abwechslung von $SiO_2$-Filmen und $TiO_2$-Filmen aufweist und der genannte Filter dabei die folgende Struktur hat:

| Schicht | Material | Dicke (nm) |
|---|---|---|
| 34 | $SiO_2$ | 64 |
| 33 | $TiO_2$ | 85 |
| 32 | $SiO_2$ | 155 |
| 31 | $TiO_2$ | 89 |
| 30 | $SiO_2$ | 147 |
| 29 | $TiO_2$ | 87 |
| 28 | $SiO_2$ | 144 |
| 27 | $TiO_2$ | 87 |
| 26 | $SiO_2$ | 153 |
| 25 | $TiO_2$ | 85 |
| 24 | $SiO_2$ | 145 |
| 23 | $TiO_2$ | 91 |
| 22 | $SiO_2$ | 149 |
| 21 | $TiO_2$ | 91 |
| 20 | $SiO_2$ | 157 |
| 19 | $TiO_2$ | 94 |
| 18 | $SiO_2$ | 169 |
| 17 | $TiO_2$ | 112 |
| 16 | $SiO_2$ | 189 |
| 15 | $TiO_2$ | 121 |
| 14 | $SiO_2$ | 191 |
| 13 | $TiO_2$ | 125 |
| 12 | $SiO_2$ | 193 |
| 11 | $TiO_2$ | 123 |
| 10 | $SiO_2$ | 192 |
| 9 | $TiO_2$ | 124 |
| 8 | $SiO_2$ | 199 |
| 7 | $TiO_2$ | 124 |
| 6 | $SiO_2$ | 197 |
| 5 | $TiO_2$ | 128 |
| 4 | $SiO_2$ | 190 |
| 3 | $TiO_2$ | 119 |
| 2 | $SiO_2$ | 172 |
| 1 | ITO | 250 |
| **Substrat** | **Glas** | |

**15.** Optisches System, ausgewählt aus einer Gruppe, die eine Lampe, eine Bürolampe, ein Beleuchtungssystem mittels optischer Fasern, eine Verglasung, ein optisches Projektionssystem und eine Glüh- bzw. Glasbirne umfasst, **dadurch gekennzeichnet, dass** sie einen Filter nach einem der vorangehenden Ansprüche 1 bis 14 umfasst.

**16.** Operationsbeleuchtung oder Behandlungslampe, **dadurch gekennzeichnet, dass** sie einen wärmeabsorbierenden Filter nach einem der vorangehenden Ansprüche 1 bis 14 umfasst.

**17.** Verfahren zur Herstellung des wärmeabsorbierenden Filters, **dadurch gekennzeichnet, dass** es umfasst:

a) Bereitstellen eines Substrats,
b) Abscheiden einer Schicht aus einem IR-reflektierenden Material auf wenigstens einer Oberfläche des genannten Substrats,
c) Abscheiden - auf der IR-reflektierenden Schicht - eines einen Interferenzfilter im sichtbaren Bereich bildenden Überzugs, wie beschrieben in Anspruch 1.

**18.** Verfahren nach Anspruch 17, bei dem das IR-reflektierende Material Zinndotiertes Indiumoxid ist, abgeschieden auf dem Substrat durch Magnetron-Sputtern.

**19.** Verfahren nach Anspruch 18, bei dem das Magnetron-Sputtern mittels eines Sintertargets erfolgt, dessen Zusammensetzung ungefähr 9 bis 11 Massenprozent Zinnoxid in $In_2O_3$ beträgt.

**20.** Verfahren nach Anspruch 18, das außerdem einen Schritt $a_1$) zum Tempern des auf dem Substrat abgeschiedenen IR-reflektierenden Materials umfasst.

**21.** Verfahren nach Anspruch 17, wobei bei dem in dem vorangehenden Anspruch 7 definierten Interferenzfilter der Schritt c) zur Abscheidung des Interferenzfilters ein Schritt zur Abscheidung der realisierten Filme durch eine Vakuumverdampfungs- oder Sputtertechnik ist.

**22.** Verfahren nach Anspruch 17, bei dem der Schritt zur Abscheidung der Filme durch reaktiv unterstützte reaktive Verdampfung realisiert wird.

**23.** Verfahren nach Anspruch 17, wobei bei dem in dem vorangehenden Anspruch 10 definierten Interferenzfilter der Schritt c) zur Abscheidung des Interferenzfilters ein Schritt zur Abscheidung der realisierten Filme durch eine Plasmaabscheidungstechnik ist.


**Claims**

**1.** Heat-absorbing filter including a substrate, at least one layer of a infrared reflecting material, and a coating forming an interference filter in the visible range, **characterized in that** the coating forming an interference filter in the visible range includes at least two different stacks, wherein a first stack group has an alternation of a first film and of a second film repeated N times and wherein a second stack group has an alternation of a third film and of a fourth film repeated N times, the first and/or the second film or films being differentiated from the third and/or the fourth film or films respectively by its/their thickness, the first and third films having a thickness L or a multiple of L and being constituted by a first material having a refractive index $n_1$, and the third and fourth films having a thickness H or a multiple of H and being constituted by a second material having a refractive index $n_2$, wherein N is a whole number $\geq 3$ and H and L are geometric thicknesses, and wherein N, H, L, $n_1$ and $n_2$ are such that the coating forming an interference filter has a transmission window located between 400 and 800 nm.

**2.** Heat-absorbing filter according to claim 1, wherein the layer of infrared reflecting material coats at least one surface of the substrate, and the coating forming an interference filter in the visible range coats said layer of infrared reflecting material.

**3.** Filter according to claim 1 or 2, wherein the infrared reflecting material is a transparent conducting oxide.

**4.** Filter according to claim 1 or 2, wherein the infrared reflecting material is tin doped indium oxide.

**5.** Filter according to claim 4, wherein the tin doped indium oxide has an Sn/In ratio from about 9 to about 11% by weight.

**6.** Filter according to claim 5, wherein the first material is $SiO_2$ and wherein the second material is $TiO_2$.

**7.** Filter according to claim 6, wherein the coating forming an interference filter in the visible range includes a first stack group having an alternation of the 0.5L/H/0.5L type, repeated 8 times.

**8.** Filter according to claim 7, additionally including a second stack group having an alternation of the 0.65L/1.3H/0.65L type, repeated 8 times.

**9.** Filter according to claim 5, wherein the first material is $SiO_2$, and wherein the second material is $Si_3N_4$.

**10.** Filter according to claim 9, wherein the coating forming an interference filter in the visible range includes a first stack group having an alternation of the 0.5L/H/0.5L type, repeated 6 times.

11. Filter according to claim 10, additionally including a second stack group having an alternation of the 0.65L/1.3H/0.65L type, repeated 6 times.

12. Heat-absorbing filter according to claim 2, wherein the substrate is a glass substrate, the transparent conducting oxide layer is a layer of tin doped indium oxide, and the coating forming an interference filter in the visible range is a stack in which films of $SiO_2$ and films of $TiO_2$ alternate, the stack starting with a film of $SiO_2$ deposited on the ITO layer and ending with a film of $SiO_2$ in contact with the atmosphere, said stack including 17 films of $SiO_2$ and 16 films are $TiO_2$.

13. Heat-absorbing filter according to claim 1, wherein the substrate is a glass or plastic substrate.

14. Heat-absorbing filter including a glass substrate, a layer of ITO and a coating forming an interference filter in the visible range, **characterized in that** it includes two different stack groups of films of $SiO_2$ and films of $TiO_2$, in which each stack group has an alternation of films of $SiO_2$ and films of $TiO_2$, repeated 8 times, said heat-absorbing filter having the following structures:

| Layer | Material | Thickness (nm) |
|---|---|---|
| 34 | $SiO_2$ | 64 |
| 33 | $TiO_2$ | 85 |
| 32 | $SiO_2$ | 155 |
| 31 | $TiO_2$ | 89 |
| 30 | $SiO_2$ | 147 |
| 29 | $TiO_2$ | 87 |
| 28 | $SiO_2$ | 144 |
| 27 | $TiO_2$ | 87 |
| 26 | $SiO_2$ | 153 |
| 25 | $TiO_2$ | 85 |
| 24 | $SiO_2$ | 145 |
| 23 | $TiO_2$ | 91 |
| 22 | $SiO_2$ | 149 |
| 21 | $TiO_2$ | 91 |
| 20 | $SiO_2$ | 157 |
| 19 | $TiO_2$ | 94 |
| 18 | $SiO_2$ | 169 |
| 17 | $TiO_2$ | 112 |
| 16 | $SiO_2$ | 189 |
| 15 | $TiO_2$ | 121 |
| 14 | $SiO_2$ | 191 |
| 13 | $TiO_2$ | 125 |
| 12 | $SiO_2$ | 193 |
| 11 | $TiO_2$ | 123 |
| 10 | $SiO_2$ | 192 |
| 9 | $TiO_2$ | 124 |
| 8 | $SiO_2$ | 199 |
| 7 | $TiO_2$ | 124 |
| 6 | $SiO_2$ | 197 |
| 5 | $TiO_2$ | 128 |
| 4 | $SiO_2$ | 190 |
| 3 | $TiO_2$ | 119 |
| 2 | $SiO_2$ | 172 |
| 1 | ITO | 250 |
| substrate | glass | |

**15.** Optical system chosen in the group including a lamp, an office lamp, an optical fibre lighting system, glazing, an optical projection system and a bulb, **characterized in that** it includes a filter according to any one of the preceding claims 1 to 14.

**16.** Surgical lighting or an examination lamp, **characterized in that** it includes a heat-absorbing filter according to any one of the preceding claims 1 to 14.

**17.** Process for manufacturing the heat-absorbing filter, **characterized in that** it includes the steps consisting of:

a) providing a substrate,
b) depositing on at least one surface of said substrate a layer of infrared reflecting material,
c) depositing on said layer of infrared material a coating forming an interference filter in the visible range, as defined in the preceding claim 1.

**18.** Process according to claim 17, wherein since the infrared reflecting material is of tin doped indium oxide, it is deposited by magnetron cathode sputtering on the substrate.

**19.** Process according to claim 18, wherein magnetron cathode sputtering is carried out from a sintered target the composition of which is from about 9 to about 11% by weight of tin oxide in $In_2O_3$.

**20.** Process according to claim 18, additionally including a step $a_1$) of annealing the infrared reflecting material deposited on the substrate.

**21.** Process according to claim 17, wherein since the interference filter is that defined in the previous claim 7, the step c) of depositing the interference filter is a film deposition step conducted by a technique of vacuum evaporation or cathode sputtering.

**22.** Process according to claim 17, wherein the film deposition step is conducted by reactive assisted reactive evaporation.

**23.** Process according to claim 17, wherein since the interference filter is that defined in the previous claim 10, the step c) of depositing the interference filter is a film deposition step carried out using a plasma deposition technique.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18